# EUROPEAN PATENT APPLICATION

(11) **EP 1 142 464 A1**
(43) Date of publication of application: **10.10.2001**
(21) Application number: 99973463.5
(22) Date of filing: 08.10.1999
(51) Int. Cl.: A01C 1/06

(54) **METHOD OF TREATING SEEDS OF GRASSES**

(30) Priority: 21.12.1998 JP 36199298; 05.10.1999 JP 28410999
(71) Applicant: SHIMAZAKI SEED CO., LTD., Hamamatsu-shi Shizuoka-ken 435-0052 (JP)
(72) Inventor: SHIMAZAKI, Fujio Shimazaki Seed Co., Ltd., Hamamatsu-shi Shizuoka-ken 435-0052 (JP); NISHIDA, Yoshitsugu, Sakurai-shi Nara-ken 633-0021 (JP)
(74) Representative: Finnie, Peter John
(86) International application number: JP9905554
(87) International publication number: WO0036902

(57) **Abstract**

Prior to planting, grass seeds such as paddy rice-seeds and corn seeds are exposed a magnetic field and, thereafter an electric field under conditions the seeds are being put on an iron body, or vice versa. Preferably, as a post-treatment step, the grass seeds are soaked in a special water.
The water has already been exposed to an electric field and a magnetic field.
Those treatments activate their germination genes and growth genes, thereby especially increasing the crop yield.

## Description

### Technical Field

This invention relates to a method for treating grass seeds such as paddy rice-seeds and corn seeds, and more particularly, to a method for physically treating grass seeds, thereby improving the crop yield.

### Background Art

There have hitherto been studied methods for artificially treating grass seeds such as paddy rice-seeds prior to planting them, thereby improving the crop and taste of the resulting rice. There have been reported that substantive effects were obtained on recombined seeds and hybridized seeds.

However, people have still felt anxious in application of recombination on grass seeds in terms of safety.

Further, it is understood that even if hybridization (one generation hybridization) has been applied, the applied seeds could provide a marginal about 30% increase in crop yield.

### Disclosure of Invention

Therefore, an object of the invention is to provide a method for treating grass seeds, thereby increasing the crop yield.

A further object of the invention is to provide a safe method for treating grass seeds.

The inventors have studied on grass seeds for solving the above-described problems, and found that application of a magnetic field treatment and an electric field treatment under special conditions activates their germination genes and growth genes, thereby especially increasing the crop yield, on the basis of which the invention has been accomplished.

According to the invention, there is provided a method for treating grass seeds comprising a magnetic field treatment step of exposing the grass seeds to a magnetic field and an electric field treatment step of exposing the grass seeds to an electric field under conditions where the grass seeds are put on an iron body.

Preferably, the iron body is of gray cast iron.

Preferably, the electric field treatment step is conducted after the magnetic field treatment step has been conducted.

Preferably, the method further includes as a post-treatment step, a water-soaking treatment step of soaking the grass seeds into a preliminarily treated water, the preliminary treated water having already been subjected to a preliminary treatment of exposing it to an electric field and to a magnetic field.

### Brief Description of Drawings

Fig. 1 is a perspective view of an exemplary electric field generating device with which is conducted an embodiment method for treating grass seeds according to the invention.
Fig. 2 is a partially-cutaway front view of an exemplary magnetic field generating device with which is conducted an embodiment method for treating grass seeds according to the invention.

### Best Mode for Carrying Out the Invention

Hereunder, there is described a best mode for carrying out the invention.

### (Object of Treatment)

The object of treatment is grass seeds. The grass seeds comprise paddy rice-seeds and corn seeds.

### (Treatment Method)

The method comprises a magnetic field treatment step of exposing the grass seeds to a magnetic field and an electric field treatment step of exposing the grass seeds to an electric field under conditions where the grass seeds are put on an iron body.

Preferably, the electric field treatment step is conducted after the magnetic field treatment step has been conducted.

Preferably, the method further includes as a post-treatment step, a water-soaking treatment step of soaking the grass seeds into a preliminarily treated water, the preliminary treated water having already been subjected to a preliminary treatment of exposing it to an electric field and to a magnetic field.

Hereunder, there are described the magnetic field treatment step, the electric field treatment step and the water-soaking treatment step.

### 1. Electric Field Treatment Step

The electric field treatment step comprises exposing grass seeds in an electric field atmosphere where an electric field being generated for a given time. In the atmosphere, the grass seeds are put on an iron body.

In this specification, the iron body means a body of metal comprising iron (Fe) as a major component. Accordingly, the iron body includes, not only iron simple but also, iron-based alloys.

The iron body is used as a discharge electrode. The use of the iron body is expected to cause an electric filed emission phenomenon in air (which is thought to cause ordinarily under application of a strong electric field). The electric field emission phenomenon is a physical phenomenon that charged particles are emitted from a conductor. Because the iron body is used, iron ions are emitted from an iron body when the electric field emission phenomenon occurs. The emitted iron ions are thought to be adsorbed on the grass seeds. The treatment is thought to impart to the grass seeds, their germination genes and growth genes activated still more.

The iron body may take any shape provided that grass seeds can be put on the iron body. The iron body includes a bulk body and a powdered body. When the powdered body is used, it is spread on which grass seeds are put.

Preferably, the iron body is of cast iron. More preferably, the iron body is of gray cast iron including graphite.

A preferable, typical iron body is a glass wool-like porous body (having a porosity of about 50 %). The porous body is made by sintering small sharp pieces of gray cast iron. This iron body is expected to provide good effects because the body is a sintered bulk body composed of many small sharp pieces each having at its tip an extremely small radius of curvature. The radius of curvature of each piece is as small as those of tips of wires, sharp cutting edges and needles. Such extremely small radius of curvature is thought to easily cause an electric field emission phenomenon even if a low voltage of ordinary several kilo volts is applied.

A numerical range of the applied voltage in the electric field atmosphere to grass seeds is dependent on the shape of iron body and the like disposed therein because the iron body is required to practically make a source for causing an electric field emission phenomenon, thereby emitting iron ions therefrom, as described above. An electric breakdown phenomenon is known to be likely to occur in air even if the applied voltage is relatively low, which is different from in vacuum. Accordingly, an electric field emission phenomenon is also likely to occur from the iron body in air even if a relatively low voltage is applied. Therefore, it should be understood that an iron body can emit iron ions in air even if an ordinary, low voltage is applied, provided that the iron body has a shape suitable for causing an electric field emission phenomenon.

The applied voltage is expected to be adjusted at 5.00 kV or more. The electric current applied may be alternating or direct. Preferably, it is direct.

The supply voltage is ordinarily supplied via a transformer (from a power supply). The applied voltage is different from the output voltage of the transformer. To grass seeds is applied the applied voltage, not the output voltage.

The time required for exposing grass seeds to an electric field, namely during which a voltage is applied, is dependent on the number of grass seeds, the kind (such as shape) of iron body and the type of an electric field generating device for use.

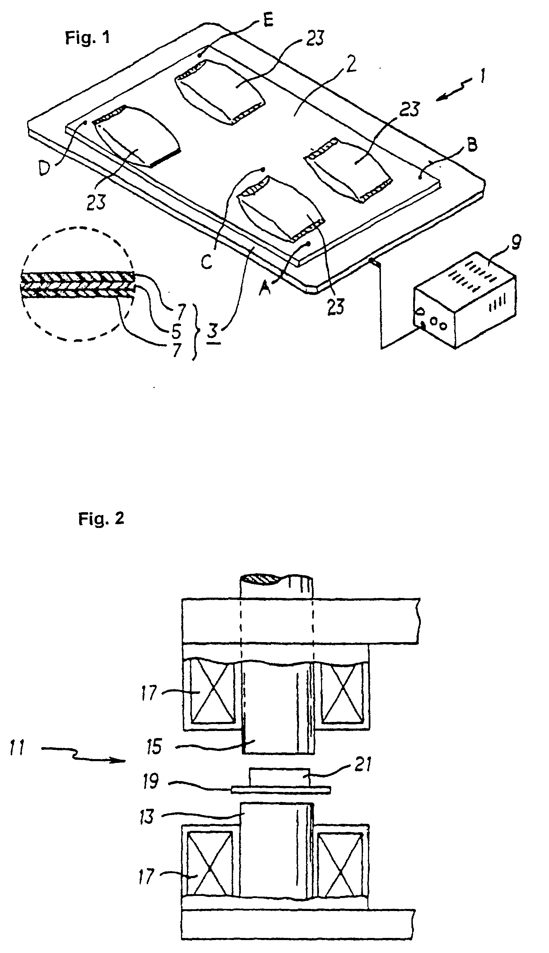

The electric field treatment step may be conducted with an electric field generating device 1 shown in Fig. 1.

The device 1 comprises a flat plate 2 of the above-mentioned porous gray cast iron body (having a porosity of about 50 %), an electric bed sheet (or conductive sheet) 3, and a variable transformer 9.

As shown in Fig. 1, the flat plate 2 is about 30cm in width, about 60 cm in length and about 10mm in thickness. The electric bed sheet 3 has a three-layered body of a carbon sheet 5 and two vinyl chloride films 7 each covering an opposite surface of the carbon sheet 5. The carbon sheet 5 has a thickness of about 0.4 mm. The vinyl chloride film 7 has a thickness of about 1.0 mm. The electric bed sheet 3 is about 40 cm in width and about 70 cm in length.

To the electric bed sheet 3 is connected the variable transformer 9. The variable transformer 9 is of a practical type and can increase an alternating current voltage of 100V to a maximum alternating current voltage of 12 kV.

The electric field treatment is conducted by enclosing an amount of grass seeds in a bag 23, putting the bag 23 on the flat plate 2, and thereafter activating the variable transformer 9, thereby applying a voltage to the carbon sheet 5.

The voltage of the flat plate 2 was measured when to the carbon sheet 5 is applied a voltage of 7.0 kV as the output voltage from the variable transformer 9. In order to obtain objective results, the measurement is done on five points (A, B, C, D, E) of the flat sheet 2. The results are shown in Table 1.

**Table 1**

| Output Voltage of Transformer | Voltage Measured (kV) | | | | |
|---|---|---|---|---|---|
| | A | B | C | D | E |
| 7.0 kV | 6.45 | 6.65 | 7.00 | 6.45 | 6.75 |

Table 1 demonstrates that the output voltage of about 7.0 kV should be applied from the variable transformer 9 to the carbon sheet 5 when about 6.45 to 7.00 kV should be applied to grass seeds put on the flat plate 2.

### 2. Magnetic Field Treatment Step

The magnetic field treatment step is conducted by exposing grass seeds in a magnetic field atmosphere where a magnetic field is being generated for a given time.

Preferably, the magnetic force in the magnetic atmosphere is adjusted at 2,000 Gs or more. More preferably, the magnetic force is adjusted within the range of 3, 000 to 4,000 Gs. The time required for exposing grass seeds to a magnetic field is dependent on the kind of grass seeds and the like.

The magnetic field treatment may be conducted with a magnetic field generating device 11 shown in Fig. 2. The magnetic field generating device 11 is available from Kanetec Co., Ltd (in Ueda-shi, Nagano-ken Japan as Name: MFG-300 type, Maximum Output: 20 kGs).

The magnetic field generating device 11 comprises a cylindrical stationary shaft 13 as a magnetic core, a movable shaft 15 and a coil 17. The stationary shaft 13 and the movable shaft 15 are positioned oppositely and coaxially with each other. The movable shaft 15 is adjusted movably toward and away from the stationary shaft 13. On each side part of the stationary shaft 13 and the movable shaft 15 is wound a conducting coil 17 for generating a magnetic field, respectively.

Numerical symbol 19 designates a stage of a high permeable substance. The stage 19 is so disposed in a gap defined by the stationary shaft 13 and the movable shaft 15 by a supporter (not shown) that it is spaced away from and opposite to both of the stationary shaft 13 and the movable shaft 15.

The magnetic field treatment is conducted after grass seeds are enclosed in a container 21 and placed on the stage 19.

### 3. Water-Soaking Treatment Step

The water-soaking treatment is conducted by soaking grass seeds in a preliminarily treated water for a given time. The preliminarily treated water is a special water which has preliminarily been subjected to an electric field treatment and a magnetic field treatment.

The electric field treatment may be followed by the magnetic field treatment and vice versa.

With respect to the preliminary treatment of water, preferably, the magnetic force applied in the magnetic field atmosphere is adjusted within the range of 3,000 ⊥ 4,000 Gs, and the applied voltage in the electric field atmosphere is adjusted within the range of 3.5 ⊥ 7.0 kV. Preferably, after grass seeds has been subjected to the above-described electric field treatment and the above-described magnetic field treatment, the treated grass seeds are soaked in the above-described, preliminarily treated, low-temperature water (of about 1 ⊥ 10) for 12 ⊥ 48 hours.

As many apparently widely different embodiments of this invention may be made without departing from the spirit and scope thereof, it is to be understood that the invention is not limited to the specific embodiments thereof except as defined in the appended claims.

For example, any other practical devices may be used in practice in place of the electric field generating device 1 and the magnetic field generating device 11 because they are pilot-type ones. In the magnetic field treatment, a device with a permanent magnetic body is ordinarily used in practice.

### Example 1

According to a method for treating grass seeds falling within the scope of the invention, paddy rice-seeds were treated. The treated paddy rice-seeds and untreated paddy rice-seeds (for comparison) were planted, transplanted and cropped. In terms of yield and taste, the rices derived from the treated paddy rice-seeds were compared with the rice derived from the untreated paddy rice-seeds.

### (1) Object of Treatment

The object of treatment was paddy rice-seeds available under a bland name of KOSHIHIKARI. The paddy rice-seeds were subjected to preliminarily to a known specific gravity separating treatment and heavy ones were subjected to the following treatment steps.

### (2) Physical Treatment Step

The following treatment steps were conducted on March 10, 1998.

After the electric field treatment had been conducted, the magnetic field treatment step was conducted. After the magnetic field treatment step had been conducted, the water-soaking treatment step was conducted.

### 1. Electric Field Treatment Step

The electric field generating device 1 of Fig. 1 was used. The paddy rice-seeds (16Kg) were separated evenly into four and enclosed into four bags 23 (4Kg/one bag). The four bags 23 were put on the flat plate 2 of the device 1. Thereafter, the device 1 was activated. The current applied was alternating. The voltage applied to the paddy rice-seeds were adjusted at 6.45 ⊥ 7.00 kV. The time required for exposing the paddy rice-seeds to the electric field (hereunder, which is referred to as the time exposed) was adjusted at 1 hour, 3 hours, 6 hours and 9 hours, respectively.

In order to change the time exposed, the device 1 was stopped after the lapses of 1, 3, 6 and 9 hours from the start of the treatment. Whenever the device 1 was stopped, one bag 23 was removed from the device 1. Accordingly, 3 hours, 6 hours and 9 hours (as the time exposed) were not continuous times.

After the electric field treatment had been completed, the treated paddy rice-seeds were removed from the device 1, were put in another container and were maintained at ordinary temperature.

### 2. Magnetic Field Treatment Step

The magnetic field generating device 11 of Fig. 2 was used. After the paddy rice-seeds (which had been subjected to the above electric field treatment) were enclosed in another container for the device 11 and were placed on the stage of the device 11. Thereafter, the device 11 was activated. The magnetic force applied was adjusted at 4,000 Gs. The time required for exposing the paddy rice-seeds to the magnetic field (hereunder, which is referred to as the time exposed) was adjusted for 15 minutes (15 min.).

After the magnetic field treatment had been completed, the treated paddy rice-seeds were removed from the device 11, were put in another container and were maintained at ordinary temperature.

### 3. Water-Soaking Treatment Step

The electric field generating device 1 of Fig. 1 and the magnetic field generating device 11 of Fig. 2 were used to preliminarily treat a water to make a preliminarily treated water. After an amount of water was enclosed in a container, it was subjected to a preliminary treatment under the following conditions. After the water had been subjected to the electric field treatment, it was subjected to the magnetic field treatment.

**Table 2**

| Object of Treatment: Paddy rice-seeds | | | |
|---|---|---|---|
| Preliminary Treatment on Water | | | |
| Electric Field Treatment | | Magnetic Field Treatment | |
| Voltage | Time Exposed | Magnetic Force | Time Exposed |
| 3.5 kV | 8 hours | 4,000 Gs | 30 min. 45 min. 60 min. |
| 5.0 kV | 6 hours | | |
| 7.0 kV | 4 hours | | |

The preliminarily treated water was maintained in a refrigerator at 5 and the paddy rice-seeds were soaked for 24 hours therein.

Thereafter, the paddy rice-seeds were removed from the container and dried in air. After the rice-seeds had fully been dried, they were enclosed in another container and were maintained at ordinary temperature.

In order to make your understanding more easy, the conditions employed in the electric field treatment, the magnetic field treatment and the water-soaking treatment were shown in the following table 3.

**Table 3**

| Object of Treatment: Paddy rice-seeds | | | | | |
|---|---|---|---|---|---|
| Electric Field Treatment | | Magnetic Field Treatment | | Water-Soaking Treatment | |
| Voltage | Time Exposed | Magnetic force | Time Exposed | Temperatur e | Time Exposed |
| 6.45 ⊥ 7.00 kV | 1 hour 3 hours 6 hours 9 hours | 4,000 Gs | 15 min. | About 5 | 24 hours |

### (3) Planting, Transplanting and Cropping

The treated paddy rice-seeds (sample Nos. 1136) and untreated paddy rice-seeds (for comparison) were planted in a field owned by Mr. Tadashi NAKAMURA in Hamamatsu-shi, Shizuoka-ken, Japan on April 8, 1998. The transplanting of rice seedlings derived from the seeds was conducted on May 20, 1998 (by two seedlings for one root). The rices derived from the treated paddy rice-seeds were harvested on September 10, 1998, whereas the rices derived from the untreated paddy rice-seeds were harvested on September 22, 1998.

Incidentally, the rate of the amount of manure put on the seedlings derived from the treated paddy rice-seeds to that put on the seedlings derived from the untreated paddy rice-seeds was 1.5 : 1. That is because the former was expected to be likely to tiller to have the number of roots (thereby to make ears) increased.

### (4) Results of Observation

Growth was observed on the seedlings after they had germinated and before they were transplanted. With respect to the growth speed, the seedlings derived from the treated paddy rice-seeds were on average about 30% faster than those derived from the untreated paddy rice-seeds. With respect to the period ranging from their transplantation to harvest, the seedlings derived from the treated paddy rice-seeds were 12 days shorter than those derived from the untreated paddy rice-seeds.

### (5) Estimation of Crop Yield

Immediately before they were harvested, 10 roots were randomly chosen for sampling and the number of ears in the 10 roots was counted. The number of the ears derived from the untreated paddy rice-seeds was 178 (for the 10 roots). The following tables 4 to 12 (Object of Treatment: Paddy rice-seeds) show increasing rate of the number of ears (for the 10 roots) derived from each treated paddy rice-seeds to the number of ears (178 for the 10 roots) derived from the untreated paddy rice-seeds (for comparison).

**Table 4**

| Object of Treatment: Paddy rice-seeds < | | |
|---|---|---|
| Electric Field Treatment (Applied Voltage: 6.45 ⊥ 7.00 kV) Magnetic Field Treatment (Magnetic Force: 4,000 Gs Time Exposed: 15 min.) Preliminary Treatment of Water for Use in Water-Soaking Treatment (Applied Voltage: 3.5 kV Time Exposed: 8 hours) (Magnetic Force 4,000 Gs Time Exposed: 30 min.) | | |

| Sample | Time Exposed | Increasing Rate |
|---|---|---|
| No.1 | 1 hour | 35.6 % |
| No.2 | 3 hours | 40.5 % |
| No.3 | 6 hours | 49.0 % |
| No.4 | 9 hours | 56.8 % |

**Table 5**

| Object of Treatment: Paddy rice-seeds | | |
|---|---|---|
| Electric Field Treatment (Applied Voltage: 6.45 ⊥ 7.00 kV) Magnetic Field Treatment (Magnetic Force: 4,000 Gs Time Exposed: 15 min.) Preliminary Treatment of Water for Use in Water-Soaking Treatment (Applied Voltage: 5.0 kV Time Exposed: 6 hours) (Magnetic Force 4,000 Gs Time Exposed: 30 min.) | | |

| Sample | Time Exposed | Increasing Rate |
|---|---|---|
| No.5 | 1 hour | 36.2 % |
| No.6 | 3 hours | 39.2 % |
| No.7 | 6 hours | 48.3 % |
| No.8 | 9 hours | 53.0 % |

**Table 6**

| Object of Treatment: Paddy rice-seeds | | |
|---|---|---|
| Electric Field Treatment (Applied Voltage: 6.45 ⊥ 7.00 kV) Magnetic Field Treatment (Magnetic Force: 4,000 Gs Time Exposed: 15 min.) Preliminary Treatment of Water for Use in Water-Soaking Treatment (Applied Voltage: 7.0 kV Time Exposed: 4 hours) (Magnetic Force 4,000 Gs Time Exposed: 30 min.) | | |

| Sample | Time Exposed | Increasing Rate |
|---|---|---|
| No.9 | 1 hour | 33.2 % |
| No.10 | 3 hours | 44.1 % |
| No.11 | 6 hours | 52.8 % |
| No.12 | 9 hours | 51.0 % |

**Table 7**

| Object of Treatment: Paddy rice-seeds | | |
|---|---|---|
| Electric Field Treatment (Applied Voltage: 6.45 ⊥ 7.00 kV) Magnetic Field Treatment (Magnetic Force: 4,000 Gs Time Exposed: 15 min.) Preliminary Treatment of Water for Use in Water-Soaking Treatment (Applied Voltage: 3.5 kV Time Exposed: 8 hours) (Magnetic Force 4,000 Gs Time Exposed: 45 min.) | | |

| Sample | Time Exposed | Increasing Rate |
|---|---|---|
| No.13 | 1 hour | 33.2 % |
| No.14 | 3 hours | 36.7 % |
| No.15 | 6 hours | 38.5 % |
| No.16 | 9 hours | 47.0 % |

**Table 8**

| Object of Treatment: Paddy rice-seeds | | |
|---|---|---|
| Electric Field Treatment (Applied Voltage: 6.45 ⊥ 7.00 kV) Magnetic Field Treatment (Magnetic Force: 4,000 Gs Time Exposed: 15 min.) Preliminary Treatment of Water for Use in Water-Soaking Treatment (Applied Voltage: 5.0 kV Time Exposed: 6 hours) (Magnetic Force 4,000 Gs Time Exposed: 45 min.) | | |

| Sample | Time Exposed | Increasing Rate |
|---|---|---|
| No.17 | 1 hour | 33.4 % |
| No.18 | 3 hours | 41.7 % |
| No.19 | 6 hours | 46.3 % |
| No.20 | 9 hours | 53.6 % |

**Table 9**

| Object of Treatment: Paddy rice-seeds | | |
|---|---|---|
| Electric Field Treatment (Applied Voltage: 6.45 ⊥ 7.00 kV) Magnetic Field Treatment (Magnetic Force: 4,000 Gs Time Exposed: 15 min.) Preliminary Treatment of Water for Use in Water-Soaking Treatment (Applied Voltage: 7.0 kV Time Exposed: 4 hours) (Magnetic Force 4,000 Gs Time Exposed: 45 min.) | | |

| Sample | Time Exposed | Increasing Rate |
|---|---|---|
| No.21 | 1 hour | 34.7 % |
| No.22 | 3 hours | 38.2 % |
| No.23 | 6 hours | 49.3 % |
| No.24 | 9 hours | 57.1 % |

**Table 10**

| Object of Treatment: Paddy rice-seeds | | |
|---|---|---|
| Electric Field Treatment (Applied Voltage: 6.45 ⊥ 7.00 kV) Magnetic Field Treatment (Magnetic Force: 4,000 Gs Time Exposed: 15 min.) Preliminary Treatment of Water for Use in Water-Soaking Treatment (Applied Voltage: 3.5 kV Time Exposed: 8 hours) (Magnetic Force 4,000 Gs Time Exposed: 60 min.) | | |

| Sample | Time Exposed | Increasing Rate |
|---|---|---|
| No.25 | 1 hour | 32.3 % |
| No.26 | 3 hours | 38.3 % |
| No.27 | 6 hours | 38.8 % |
| No.28 | 9 hours | 54.5 % |

**Table 11**

| Object of Treatment: Paddy rice-seeds | | |
|---|---|---|
| Electric Field Treatment (Applied Voltage: 6.45 ⊥ 7.00 kV) Magnetic Field Treatment (Magnetic Force: 4,000 Gs Time Exposed: 15 min.) Preliminary Treatment of Water for Use in Water-Soaking Treatment (Applied Voltage: 5.0 kV Time Exposed: 6 hours) (Magnetic Force 4,000 Gs Time Exposed: 60 min.) | | |

| Sample | Time Exposed | Increasing Rate |
|---|---|---|
| No.29 | 1 hour | 36.1 % |
| No.30 | 3 hours | 40.7 % |
| No.31 | 6 hours | 42.6 % |
| No.32 | 9 hours | 56.1 % |

**Table 12**

| Object of Treatment: Paddy rice-seeds | | |
|---|---|---|
| Electric Field Treatment (Applied Voltage: 6.45 ⊥ 7.00 kV) Magnetic Field Treatment (Magnetic Force: 4,000 Gs Time Exposed: 15 min.) Preliminary Treatment of Water for Use in Water-Soaking Treatment (Applied Voltage: 7.0 kV Time Exposed: 4 hours) (Magnetic Force 4,000 Gs Time Exposed: 60 min.) | | |

| Sample | Time Exposed | Increasing Rate |
|---|---|---|
| No.33 | 1 hour | 35.8 % |
| No.34 | 3 hours | 42.8 % |
| No.35 | 6 hours | 46.4 % |
| No.36 | 9 hours | 51.3 % |

The tables 4 to 12 demonstrate that application of the special physical treatment method according to the invention to paddy rice-seeds accelerates "tiller effect" dramatically.

The tastes of the crops were shown in the following table 13.

In table 13, the amylose content was analyzed with a simple colorimetric analysis, and the protein content was analyzed by Kjeldahl method. The taste value was analyzed by with a taster (type:1B, Produced on 1991 by Satake Kabushiki-Kaisha).

**Table 13**

| Sample | Components of Taste | | | | Taste Value measured by the taster |
|---|---|---|---|---|---|
| | Amylose | Protein | Powdered Component | Fatty Acid | |
| No. 4 | 18.6 | 6.8 | 12.6 | 6.9 | 72 |
| No. 24 | 18.7 | 7.1 | 12.6 | 6.9 | 74 |
| No. 28 | 18.9 | 6.1 | 12.3 | 7.0 | 76 |
| No. 32 | 18.9 | 6.1 | 12.3 | 7.2 | 75 |
| Untreated | 20.0 | 6.6 | 12.3 | 7.1 | 66 |

Table 13 demonstrates that application of the special physical treatment according to the invention to paddy rice-seeds provides the amylose contents increased and the taste values increased dramatically.

### Example 2

According to a method for treating grass seeds falling within the scope of the invention, paddy rice-seeds were treated. The treated paddy rice-seeds and untreated paddy rice-seeds (for comparison) were planted, transplanted and cropped. In terms of yield, the rices derived from the treated paddy rice-seeds were compared with the rice derived from the untreated paddy rice-seeds.

### (1) Object of Treatment

The object of treatment was paddy rice-seeds available under a bland name of KOSHIHIKARI. The paddy rice-seeds were subjected to preliminarily to a known specific gravity separating treatment and heavy ones were subjected to the following treatment steps.

### (2) Physical Treatment Step

The following treatment steps were conducted on January 11, 1999.

After the magnetic field treatment had been conducted, the electric field treatment step was conducted. After the electric field treatment step had been conducted, the water-soaking treatment step was conducted.

### 1. Magnetic Field Treatment Step

The magnetic field generating device 11 of Fig. 2 was used. After the paddy rice-seeds were enclosed in a container for the device 11 and were placed on the stage of the device 11. Thereafter, the device 11 was activated. The magnetic force applied was adjusted at 4,000 Gs. The time required for exposing the paddy rice-seeds to the magnetic field was adjusted for 15 minutes (15 min.).

Immediately after the magnetic field treatment had been completed, the treated paddy rice-seeds were subjected to the electric field treatment.

### 2. Electric Field Treatment Step

The electric field generating device 1 of Fig. 1 was used. The paddy rice-seeds (which had already been subjected to the magnetic field treatment) were separated evenly into four and enclosed into four bags 23. The four bags 23 were put on the flat plate 2 of the device 1. Thereafter, the device 1 was activated. The current applied was alternating. The voltage applied to the paddy rice-seeds were adjusted at 6.45 ⊥ 7.00 kV. The time required for exposing the bags 23 to the electric field was adjusted at 1 hour, 3 hours, 6 hours and 9 hours, respectively.

In order to change the time exposed, the device 1 was stopped after the lapses of 1, 3, 6 and 9 hours from the start of the treatment. Whenever the device 1 was stopped, one bag 23 was removed from the device 1. Accordingly, 3 hours, 6 hours and 9 hours (as the time exposed) were not continuous times.

Immediately after the electric field treatment had been completed, the treated paddy rice-seeds were subjected to the water-soaking treatment.

### 3. Water-Soaking Treatment Step

The electric field generating device 1 of Fig. 1 and the magnetic field generating device 11 of Fig. 2 were used to preliminarily treat a water to make a preliminarily treated water. After an amount of water was enclosed in a container, it was subjected to a preliminary treatment under the following conditions shown in table 14. After the water had been subjected to the magnetic field treatment, it was subjected to the electric field treatment.

**Table 14**

| Object of Treatment: Paddy rice-seeds | | | |
|---|---|---|---|
| Preliminary Treatment on Water | | | |
| Magnetic Field Treatment | | Electric Field Treatment | |
| Magnetic Force | Time Exposed | Voltage | Time Exposed |
| 4,000 Gs | 30 min. 45 min. 60 min. | 3.5 kV | 8 hours |
| | | 5.0 kV | 6 hours |
| | | 7.0 kV | 4 hours |

The preliminarily treated water was maintained in a refrigerator at 5 and the paddy rice-seeds were soaked for 24 hours therein.

Thereafter, the paddy rice-seeds were removed from the container and dried in air. After the rice-seeds had fully been dried, they were enclosed in another container and were maintained therein at ordinary temperature.

In order to make your understanding more easy, the conditions employed in the magnetic field treatment, the electric field treatment and the water-soaking treatment were shown in the following table 15.

**Table 15**

| Object of Treatment: Paddy rice-seeds | | | | | |
|---|---|---|---|---|---|
| Magnetic Field Treatment | | Electric Field Treatment | | Water-Soaking Treatment | |
| Magnetic force | Time Exposed | Voltage | Time Exposed | Temperature | Time Exposed |
| 4,000 Gs | 15 min. | 6.45 ⊥ 7.00 kV | 1 hour 3 hours 6 hours 9 hours | About 5 | 24 hours |

### (3) Planting, Transplanting and Cropping

The treated paddy rice-seeds (sample Nos. 37172) and untreated paddy rice-seeds (for comparison) were planted in a field owned by Mr. Tadashi NAKAMURA in Hamamatsu-shi, Shizuoka-ken, Japan on April 10, 1999. The transplanting of rice seedlings derived from the seeds was conducted on May 13, 1999 (by two seedlings for one root). The rices derived from the treated paddy rice-seeds were harvested on September 7, 1999, whereas the rices derived from the untreated paddy rice-seeds were harvested on September 10, 1999.

Incidentally, manure was additionally put on the seedlings derived from the treated paddy rice-seeds in accordance with the growth state. That is because the seedlings produced many tiller, thereby having the number of roots (to make ears) increased.

### (4) Results of Observation

With respect to the period ranging from their transplantation to harvest, the seedlings derived from the treated paddy rice-seeds were substantially the same as those derived from the untreated paddy rice-seeds.

In 30 days after the transplantation, production of effective tiller (to increase the number of roots to make ears) was accelerated on the seedlings derived from the treated paddy rice-seeds.

With respect to plant height, the seedlings derived from the treated paddy rice-seeds were on average about 10% taller than those derived from the untreated paddy rice-seeds. With respect to root thickness, the seedlings derived from the treated paddy rice-seeds were on average about 8% thicker than those derived from the untreated paddy rice-seeds.

### (5) Estimation of Crop Yield

lmmediately before they were harvested, 10 roots were randomly chosen for sampling and the number of ears in the 10 roots was counted. The number of the ears derived from the untreated paddy rice-seeds was 178 (for the 10 roots). The following tables 16 to 24 (Object of Treatment: Paddy rice-seeds) show increasing rate of the number of ears (for the 10 roots) derived from each treated paddy rice-seeds to the number of ears (178 for the 10 roots) derived from the untreated paddy rice-seeds (for comparison).

**Table 16**

| Object of Treatment: Paddy rice-seeds | | |
|---|---|---|
| Magnetic Field Treatment (Magnetic Force: 4,000 Gs Time Exposed: 15 min.) Electric Field Treatment (Applied Voltage: 6.45 ⊥ 7.00 kV) Preliminary Treatment of Water for Use in Water-Soaking Treatment (Magnetic Force 4,000 Gs Time Exposed: 30 min.) (Applied Voltage: 3.5 kV Time Exposed: 8 hours) | | |

| Sample | Time Exposed | Increasing Rate |
|---|---|---|
| No.37 | 1 hour | 36.5 % |
| No.38 | 3 hours | 40.9 % |
| No.39 | 6 hours | 55.5 % |
| No.40 | 9 hours | 64.0 % |

**Table 17**

| Object of Treatment: Paddy rice-seeds | | |
|---|---|---|
| Magnetic Field Treatment (Magnetic Force: 4,000 Gs Time Exposed: 15 min.) Electric Field Treatment (Applied Voltage: 6.45 ⊥ 7.00 kV) Preliminary Treatment of Water for Use in Water-Soaking Treatment (Magnetic Force 4,000 Gs Time Exposed: 30 min.) (Applied Voltage: 5.0 kV Time Exposed: 6 hours) | | |

| Sample | Time Exposed | Increasing Rate |
|---|---|---|
| No.41 | 1 hour | 37.9% |
| No.42 | 3 hours | 56.3 % |
| No.43 | 6 hours | 61.9 % |
| No.44 | 9 hours | 44.8 % |

**Table 18**

| Object of Treatment: Paddy rice-seeds | | |
|---|---|---|
| Magnetic Field Treatment (Magnetic Force: 4,000 Gs Time Exposed: 15 min.) Electric Field Treatment (Applied Voltage: 6.45 ⊥ 7.00 kV) Preliminary Treatment of Water for Use in Water-Soaking Treatment (Magnetic Force 4,000 Gs Time Exposed: 30 min.) (Applied Voltage: 7.0 kV Time Exposed: 4 hours) | | |

| Sample | Time Exposed | Increasing Rate |
|---|---|---|
| No.45 | 1 hour | 36.8 % |
| No.46 | 3 hours | 62.0 % |
| No.47 | 6 hours | 69.7 % |
| No.48 | 9 hours | 58.8 % |

**Table 19**

| Object of Treatment: Paddy rice-seeds | | |
|---|---|---|
| Magnetic Field Treatment (Magnetic Force: 4,000 Gs Time Exposed: 15 min.) Electric Field Treatment (Applied Voltage: 6.45 ⊥ 7.00 kV) Preliminary Treatment of Water for Use in Water-Soaking Treatment (Magnetic Force 4,000 Gs Time Exposed: 45 min.) (Applied Voltage: 3.5 kV Time Exposed: 8 hours) | | |

| Sample | Time Exposed | Increasing Rate |
|---|---|---|
| No.49 | 1 hour | 41.5 % |
| No.50 | 3 hours | 43.8 % |
| No.51 | 6 hours | 48.7 % |
| No.52 | 9 hours | 67.1 % |

**Table 20**

| Object of Treatment: Paddy rice-seeds | | |
|---|---|---|
| Magnetic Field Treatment (Magnetic Force: 4,000 Gs Time Exposed: 15 min.) Electric Field Treatment (Applied Voltage: 6.45 ⊥ 7.00 kV) Preliminary Treatment of Water for Use in Water-Soaking Treatment (Magnetic Force 4,000 Gs Time Exposed: 45 min.) (Applied Voltage: 5.0 kV Time Exposed: 6 hours) | | |

| Sample | Time Exposed | Increasing Rate |
|---|---|---|
| No.53 | 1 hour | 41.8 % |
| No.54 | 3 hours | 59.3 % |
| No.55 | 6 hours | 67.2 % |
| No.56 | 9 hours | 47.6 % |

**Table 21**

| Object of Treatment: Paddy rice-seeds | | |
|---|---|---|
| Magnetic Field Treatment (Magnetic Force: 4,000 Gs Time Exposed: 15 min.) Electric Field Treatment (Applied Voltage: 6.45 ⊥ 7.00 kV) Preliminary Treatment of Water for Use in Water-Soaking Treatment (Magnetic Force 4,000 Gs Time Exposed: 45 min.) (Applied Voltage: 7.0 kV Time Exposed: 4 hours) | | |

| Sample | Time Exposed | Increasing Rate |
|---|---|---|
| No.57 | 1 hour | 57.8 % |
| No.58 | 3 hours | 63.3 % |
| No.59 | 6 hours | 59.3 % |
| No.60 | 9 hours | 42.0 % |

**Table 22**

| Object of Treatment: Paddy rice-seeds | | |
|---|---|---|
| Magnetic Field Treatment (Magnetic Force: 4,000 Gs Time Exposed: 15 min.) Electric Field Treatment (Applied Voltage: 6.45 ⊥ 7.00 kV) Preliminary Treatment of Water for Use in Water-Soaking Treatment (Magnetic Force 4,000 Gs Time Exposed: 60 min.) (Applied Voltage: 3.5 kV Time Exposed: 8 hours) | | |

| Sample | Time Exposed | Increasing Rate |
|---|---|---|
| No.61 | 1 hour | 41.6 % |
| No.62 | 3 hours | 74.3 % |
| No.63 | 6 hours | 68.8 % |
| No.64 | 9 hours | 62.9 % |

**Table 23**

| Object of Treatment: Paddy rice-seeds | | |
|---|---|---|
| Magnetic Field Treatment (Magnetic Force: 4,000 Gs Time Exposed: 15 min.) Electric Field Treatment (Applied Voltage: 6.45 ⊥ 7.00 kV) Preliminary Treatment of Water for Use in Water-Soaking Treatment (Magnetic Force 4,000 Gs Time Exposed: 60 min.) (Applied Voltage: 5.0 kV Time Exposed: 6 hours) | | |

| Sample | Time Exposed | Increasing Rate |
|---|---|---|
| No.65 | 1 hour | 37.2 % |
| No.66 | 3 hours | 55.4 % |
| No.67 | 6 hours | 68.8 % |
| No.68 | 9 hours | 60.3 % |

**Table 24**

| Object of Treatment: Paddy rice-seeds | | |
|---|---|---|
| Magnetic Field Treatment (Magnetic Force: 4,000 Gs Time Exposed: 15 min.) Electric Field Treatment (Applied Voltage: 6.45 ⊥ 7.00 kV) Preliminary Treatment of Water for Use in Water-Soaking Treatment (Magnetic Force 4,000 Gs Time Exposed: 60 min.) (Applied Voltage: 7.0 kV Time Exposed: 4 hours) | | |

| Sample | Time Exposed | Increasing Rate |
|---|---|---|
| No.69 | 1 hour | 47.7 % |
| No.70 | 3 hours | 71.4 % |
| No.71 | 6 hours | 65.8 % |
| No.72 | 9 hours | 51.3 % |

### Example 3

According to a method for treating grass seeds falling within the scope of the invention, corn seeds were treated. The treated corn seeds and untreated corn seeds (for comparison) were planted and cropped. In yield, the corns derived from the treated corn seeds were compared with those derived from the untreated corn seeds.

### (1) Object of Treatment

The object of treatment was immature corn seeds available under a bland name of "Carnival 85, Bicolor type F" from Kyowa Seed Co., Ltd. (in Tokyo, Japan).

### (2) Physical Treatment Step

The following treatment steps were conducted on January 213, 1999.

After the magnetic field treatment had been conducted, the electric field treatment step was conducted. After the electric field treatment step had been conducted, the water-soaking treatment step was conducted.

### 1. Magnetic Field Treatment step

The magnetic field generating device 11 of Fig. 2 was used. After the corn seeds were enclosed in a container for the device 11 and were placed on the stage of the device 11. Thereafter, the device 11 was activated. The magnetic force applied was adjusted at 4,000 Gs. The time required for exposing the corn seeds to the magnetic field was adjusted for 7 minutes and 30 seconds (7 min. and 30 sec.)

Immediately after the magnetic field treatment had been completed, the corn seeds were subjected to the electric field treatment.

### 2. Electric Field Treatment Step

The electric field generating device 1 of Fig. 1 was used. The corn seeds (which had already been subjected to the magnetic field treatment) were separated evenly into four and enclosed into four bags 23. The four bags 23 were put on the flat plate 2 of the device 1. Thereafter, the device 1 was activated. The current applied was alternating. The voltage applied to the corn seeds was adjusted at 6.45 ⊥ 7.00 kV. The time required for exposing the corn seeds to the electric field (hereunder, which is referred to as the time exposed) was adjusted at 30 min., 1 hour, 3 hours, and 4 hours, respectively.

Immediately after the electric field treatment had been completed, the treated corn seeds were subjected to the water-soaking treatment.

### 3. Water-Soaking Treatment Step

The magnetic field generating device 11 of Fig. 2 and the electric field generating device 1 of Fig. 1 were used to preliminarily treat a water to make a preliminarily treated water. After an amount of water was enclosed in a container, it was subjected to a preliminary treatment under the following conditions shown in table 25. After the water had been subjected to the magnetic field treatment, it was subjected to the electric field treatment.

**Table 25**

| Object of Treatment: Corn seeds | | | |
|---|---|---|---|
| Preliminary Treatment on Water | | | |
| Magnetic Field Treatment | | Electric Field Treatment | |
| Magnetic Force | Time Exposed | Voltage | Time Exposed |
| 4,000 Gs | 15 min. 30 min. | 3.5 kV | 3 hours |
| | | 5.0 kV | 2 hours |
| | | 7.0 kV | 1 hours |

The preliminarily treated water was maintained in a refrigerator at 5 and the corn seeds were soaked for 24 hours therein.

Thereafter, the corn seeds were removed from the container and dried in air. After the corn seeds were fully dried, they were enclosed in another container and maintained at ordinary temperature.

In order to make your understanding more easy, the conditions employed in the magnetic field treatment, the electric field treatment and the water-soaking treatment was shown in the following table 26.

**Table 26**

| Object of Treatment: Corn seeds | | | | | |
|---|---|---|---|---|---|
| Magnetic Field Treatment | | Electric Field Treatment | | Water-Soaking Treatment | |
| Magnetic Force | Time Exposed | Voltage | Time | Temperature | Time Exposed |
| 4,000 Gs | 7 min. and 30 sec. | 6.45 ⊥ 7.00 kV | 30 min. 1 hour 3 hours 4 hours | About 5 | 24 hours |

### (3) Planting and Cropping

The corn seeds (sample Nos. 1 to 24) maintained (upon the magnetic treatment, the electric treatment and the water-soaking treatment) and untreated corn seeds (for comparison) were raised outdoors in a farm owned by the applicant (in Sakurai-shi, Nara-ken Japan). Each sample (including untreated one) was composed of five seeds for one root. For each sample, seeds corresponding to five roots was directly planted and, after the lapse of 20 days from the plantation, among the resultant seedlings, only two goodly growing seedlings were left and the remainder was removed. The untreated sample was treated similarly. The corn derived from the treated corn seeds was harvested on July 20, 1999, whereas the corn derived from the untreated corn seeds was harvested on July 20, 1999.

### (4) Results of Observation

With respect to the period ranging from their plantation to harvest, they were substantially the same.

With respect to plant height, the seedlings derived from the treated corn seeds were on average about 10% taller than those derived from the untreated corn seeds. With respect to root thickness, the seedlings derived from the treated corn seeds were on average about 20% thicker than those derived from the untreated paddy corn seeds.

### (5) Estimation of Crop Yield

Immediately after the female ears were harvested, the rinds were peeled and the weights were measured. The following tables 27 to 32 (Object of Treatment: Corn seeds) show the rate of the average weight of the peeled ones (derived from the treated corn seeds) to the average weight (350g) of the peeled ones (derived from the untreated corn seeds (for comparison).

**Table 27**

| Object of Treatment: Corn seeds | | |
|---|---|---|
| Magnetic Field Treatment (Magnetic Force: 4,000 Gs Time Exposed: 7 min. and 30 sec.) Electric Field Treatment (Applied Voltage: 6.45 ⊥ 7.00 kV) Preliminary Treatment of Water for Use in Water-Soaking Treatment (Magnetic Force 4,000 Gs Time Exposed: 15 min.) (Applied Voltage: 3.5 kV Time Exposed: 3 hours) | | |

| Sample | Time Exposed | Increasing Rate |
|---|---|---|
| No.1 | 30 min. | 46 % |
| No.2 | 1 hour | 72 % |
| No.3 | 3 hours | 100 % |
| No.4 | 4 hours | 135 % |

**Table 28**

| Object of Treatment: Corn seeds | | |
|---|---|---|
| Magnetic Field Treatment (Magnetic Force: 4,000 Gs Time Exposed: 7 min. and 30 sec.) Electric Field Treatment (Applied Voltage: 6.45 ⊥ 7.00 kV) Preliminary Treatment of Water for Use in Water-Soaking Treatment (Magnetic Force 4,000 Gs Time Exposed: 15 min.) (Applied Voltage: 5.0 kV Time Exposed: 2 hours) | | |

| Sample | Time Exposed | Increasing Rate |
|---|---|---|
| No.5 | 30 min. | 52 % |
| No.6 | 1 hour | 90 % |
| No.7 | 3 hours | 150 % |
| No.8 | 4 hours | 121 % |

**Table 29**

| Object of Treatment: Corn seeds | | |
|---|---|---|
| Magnetic Field Treatment (Magnetic Force: 4,000 Gs Time Exposed: 7 min. and 30 sec.) Electric Field Treatment (Applied Voltage: 6.45 ⊥ 7.00 kV) Preliminary Treatment of Water for Use in Water-Soaking Treatment (Magnetic Force 4,000 Gs Time Exposed: 15 min.) (Applied Voltage: 7.0 kV Time Exposed: 1 hour) | | |

| Sample | Time Exposed | Increasing Rate |
|---|---|---|
| No.9 | 30 min. | 55 % |
| No.10 | 1 hour | 83 % |
| No.11 | 3 hours | 101 % |
| No.12 | 4 hours | 120 % |

**Table 30**

| Object of Treatment: Corn seeds | | |
|---|---|---|
| Magnetic Field Treatment (Magnetic Force: 4,000 Gs Time Exposed: 7 min. and 30 sec.) Electric Field Treatment (Applied Voltage: 6.45 ⊥ 7.00 kV) Preliminary Treatment of Water for Use in Water-Soaking Treatment (Magnetic Force 4,000 Gs Time Exposed: 30 min.) (Applied Voltage: 3.5 kV Time Exposed: 3 hours) | | |

| Sample | Time Exposed | Increasing Rate |
|---|---|---|
| No.13 | 30 min. | 40 % |
| No.14 | 1 hour | 72 % |
| No.15 | 3 hours | 110 % |
| No.16 | 4 hours | 125 % |

**Table 31**

| Object of Treatment: Corn seeds | | |
|---|---|---|
| Magnetic Field Treatment (Magnetic Force: 4,000 Gs Time Exposed: 7 min. and 30 sec.) Electric Field Treatment (Applied Voltage: 6.45 ⊥ 7.00 kV) Preliminary Treatment of Water for Use in Water-Soaking Treatment (Magnetic Force 4,000 Gs Time Exposed: 30 min.) (Applied Voltage: 5.0 kV Time Exposed: 2 hours) | | |

| Sample | Time Exposed | Increasing Rate |
|---|---|---|
| No.17 | 30 min. | 48 % |
| No.18 | 1 hour | 95 % |
| No.19 | 3 hours | 143 % |
| No.20 | 4 hours | 121 % |

**Table 32**

| Object of Treatment: Corn seeds | | |
|---|---|---|
| Magnetic Field Treatment (Magnetic Force: 4,000 Gs Time Exposed: 7 min. and 30 sec.) Electric Field Treatment (Applied Voltage: 6.45 ⊥ 7.00 kV) Preliminary Treatment of Water for Use in Water-Soaking Treatment (Magnetic Force 4,000 Gs Time Exposed: 30 min.) (Applied Voltage: 7.0 kV Time Exposed: 1 hour) | | |

| Sample | Time Exposed | Increasing Rate |
|---|---|---|
| No.21 | 30 min. | 30 % |
| No.22 | 1 hour | 76 % |
| No.23 | 3 hours | 115 % |
| No.24 | 4 hours | 140 % |

### Industrial Applicability

As set forth on the above, application of the method according to the invention to grass seeds prior to their planting will have the resultant grasses lively the resultant crop yield increased, and the resultant roots thickened, thereby having the resultant corn herbage hard to fall down.

## Claims

1. A method for treating grass seeds comprising a magnetic field treatment step of exposing the grass seeds to a magnetic field and an electric field treatment step of exposing the grass seeds to an electric field under conditions where the grass seeds are put on an iron body.

2. The method according to claim1, in which the iron body is of gray cast iron.

3. The method according to claim 1 or 2, in which the electric field treatment step is conducted after the magnetic field treatment step has been conducted.

4. The method according to any one of claims 1 to 3, in which the method further includes as a post-treatment step, a water-soaking treatment step of soaking the grass seeds into a preliminarily treated water, the preliminary treated water having already been subjected to a preliminary treatment of exposing it to an electric field and to a magnetic field.
